(19) Europäisches Patentamt
European Patent Office
Office européen des brevets

(11) EP 4 779 987 A1

(12) EUROPEAN PATENT APPLICATION

(43) Date of publication:
22.07.2026 Bulletin 2026/30

(51) International Patent Classification (IPC):
H04N 21/234 $^{(2011.01)}$    H04N 7/15 $^{(2006.01)}$
H04N 21/4223 $^{(2011.01)}$    H04N 21/4788 $^{(2011.01)}$
H04N 21/83 $^{(2011.01)}$    H04N 21/235 $^{(2011.01)}$
H04N 21/258 $^{(2011.01)}$    H04N 21/41 $^{(2011.01)}$
H04N 21/436 $^{(2011.01)}$

(21) Application number: 25152141.5

(22) Date of filing: 16.01.2025

(52) Cooperative Patent Classification (CPC):
H04N 21/23418; H04N 7/15; H04N 21/2351;
H04N 21/25816; H04N 21/25833; H04N 21/4131;
H04N 21/4223; H04N 21/43615; H04N 21/4788

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Arranged bv
3740 Bilzen (BE)

(72) Inventors:
• Eurlings, Martin
3740 Bilzen (BE)
• Van Dyck, Sebastiaan
9050 Ledeberg (BE)

(74) Representative: Winger
Mouterij 16 bus 101
3190 Boortmeerbeek (BE)

(54) **VIDEO STREAM AUTHENTICATION**

(57) A system and method for verifying the authenticity of video content is described. The system comprises a transmitter device including video capture functionality configured to capture video data of a scene and an artificial lighting device arranged to illuminate at least a portion of the scene during at least part of the capture by the video capture functionality. It also comprises an authentication platform configured to control the artificial lighting device to introduce controlled, variable lighting changes into the scene according to predetermined instructions, to receive the captured video data from the video capture functionality, and to analyze the captured video data to detect artifacts resulting from the controlled lighting changes. It further compares the detected artifacts with expected artifacts based on the predetermined instructions to determine the authenticity of the video content.

FIG. 1

## Description

### Field of the invention

The present invention relates to the field of video stream data, for example as in video communication. More particularly, systems and methods are described for authenticating video stream data using illumination applied to the scene from which the video stream data is recorded.

### Background of the invention

In an age dominated by digital media communications, ensuring the authenticity and integrity of video content is increasingly critical. Conventional methods for securing video content primarily focus on safeguarding the video stream during transmission. However, these methods exhibit significant limitations in preventing sophisticated tampering techniques employed before the video content is streamed or transmitted to a server or other device.

Traditionally, video authenticity has been secured through encryption and authentication protocols that protect the transmission channel. These measures are effective against interception and alteration during transmission and prevent the distribution of unlicensed digital products. However, they fail to address manipulations performed prior to the video's entry into the transmission system. Such manipulations include advanced techniques like deepfakes, wherein artificial intelligence is utilized to create highly convincing, entirely fabricated videos. These challenges highlight the inadequacy of conventional video feed security measures in addressing pre-stream tampering.

Recent advancements in video content analysis have focused on detecting tampering, including deepfake technologies, through image processing algorithms and machine learning techniques. These methods aim to identify the application of these technologies within video content. However, these approaches are limited to specific types of attacks and are increasingly ineffective as malicious actors develop more sophisticated methods of altering video content.

A critical need exists for a novel system and method that complements traditional video content security measures while transcending purely digital deepfake detection algorithms. This patent introduces an innovative approach that enhances video authenticity by embedding unique artifacts into the scene using light prior to video entry into the system. By physically altering the scene in real time and providing algorithms for capture and analysis, this system offers a comprehensive solution for detecting and mitigating tampering attempts at the earliest stages of video creation and distribution.

In summary, verifying video authenticity is indispensable, yet conventional methods relying solely on transmission security or software-based detection are inadequate for addressing pre-stream tampering. The proposed system provides a groundbreaking solution to this challenge by integrating simple yet effective technologies, elevating the standards of video authenticity verification in the digital age.

Devices capable of capturing images utilize a range of technologies but generally operate on a shared principle. A sensor is exposed to light for a specified period, generating an electrical charge at different pixel locations. The charge differences are proportional to the light intensity from the scene and are translated into an image. Individual pixels may be filtered to capture specific colors, enabling full-color image generation. Technologies such as CCD, CMOS, and photodiodes form the foundation of modern devices, including video cameras, smartphones, and laptops.

Depending on the presence and operation of a shutter, as well as the pixel readout method, artifacts such as video flicker can arise in captured images. These artifacts may not be visible to the human eye but can appear in the captured video.

Two primary shutter systems-global and rolling shutters-exhibit distinct artifact patterns. Global shutters refresh the entire sensor simultaneously, leading to brightness differences between frames caused by variations in artificial light intensity. Rolling shutters, which read sensor lines sequentially, introduce static or moving brightness bands within a single frame due to light intensity changes. Even devices without physical shutters, such as photodiode sensors, may exhibit rolling shutter effects because of sensor refresh rates.

While significant efforts have been made to minimize or correct these artifacts, such as flicker and associated visual distortions, opportunities exist to harness these artifacts for alternative purposes, including security mechanisms as described in this document.

In applications involving video, such as video conferencing, live broadcasts, or security monitoring, video and audio are typically compressed via a CODEC into digital packets for transmission over a network. These packets are subsequently decoded by the recipient and played back. Although end-to-end encryption ensures robust security against transmission interception, it provides no protection against authenticity breaches occurring before video encoding and transmission. Such breaches include:

1. Substituting a live video stream with a pre-recorded one.
2. Altering video content using artificial intelligence (e.g., deepfakes).
3. Remotely transmitting video from an unauthorized device as though originating from a specific device.
4. Replacing a live video stream with a still image.
5. Combinations of the above.

These scenarios illustrate the vulnerabilities inherent in existing systems, where the transmitted video may be altered without compromising the legitimacy of the transmission method itself.

While patents such as US10929677B1 and US2022004904A1 address deepfake detection, their software-driven solutions focus solely on one of the aforementioned security breaches, leaving others unaddressed. Similarly, watermarking techniques, often employed to prevent piracy or track media origins, assume the initial video is authentic and fail to verify the video's content authenticity.

This vulnerability was starkly highlighted in June 2022, when a deepfake impersonating Kyiv Mayor Vitali Klitschko participated in a video conference, deceiving high-ranked officials. As processing power advances, technologies like deepfakes will become increasingly accessible, escalating their potential for malicious use.

Hence, there is a need for a proactive solution, ensuring video authenticity, addressing the multifaceted challenges posed by tampering at its source.

**Summary of the invention**

It is an object of the present invention to provide good methods and systems for authenticating video stream data, such as for example in live video communications.

It is an advantage of embodiments of the present invention that, unlike traditional methods that focus on securing the transmission channel, embodiments of the present invention also address manipulations occurring before the video enters the system. By introducing artifacts directly into the scene using artificial lighting devices, the system ensures that tampering attempts such as deepfakes, pre-recorded substitutions, or content alterations are detectable.

It is an advantage of embodiments of the present invention that use is made of real-time, physical alterations in the scene through artificial lighting, embedding verifiable patterns into the captured video. This approach bypasses the limitations of purely software-driven solutions, making it inherently more robust against digital tampering.

It is an advantage of embodiments of the present invention that systems and methods are provided that are adaptable to Multiple Attack Vectors. While existing solutions address specific attacks (e.g., deepfake detection), embodiments of the present invention offer comprehensive protection against a broad spectrum of threats, including pre-recorded video substitutions, remote device impersonations, and still image replacements.

It is an advantage of embodiments of the present invention that systems and methods are provided that show an increased resilience using infrared technology. By incorporating infrared light sources, the system provides an additional layer of security without impacting user experience, as IR light is invisible to the human eye.

This ensures that authentication checks can occur seamlessly without user interference or discomfort.

It is an advantage of embodiments of the present invention that products are provided that allow for seamless integration with existing devices. An artificial lighting device as used in the present invention can be implemented as an external accessory or integrated into existing devices (e.g., smartphones, laptops). This flexibility allows for wide adoption and compatibility across various platforms.

It is an advantage of embodiments of the present invention that methods and systems are provided that allow the use of dynamic and encrypted authentication protocols. Systems according to embodiments of the present invention can utilize encrypted, periodically changing light patterns that are difficult to replicate or predict. This dynamic approach prevents adversaries from reproducing or bypassing the authentication artifacts.

It is an advantage of embodiments of the present invention that methods and systems are provided that allow for low latency and efficient data processing. Embodiments of the present invention can optimizes artifact detection by tailoring checks to the specific hardware setup of the transmitting device. This minimizes data transmission and computational overhead, resulting in a faster and more efficient authentication process.

It is an advantage of embodiments of the present invention that methods and systems are provided that are user-friendly. By leveraging existing video conferencing or transmission software, embodiments of the present invention integrate authentication checks without requiring significant changes to user behaviour or device operation. User experience remains unaffected, ensuring ease of adoption.

It is an advantage of embodiments of the present invention that methods and systems are provided that improve the compatibility with IoT ecosystems. Embodiments of the present invention can control and utilize IoT-connected lighting devices, enabling authentication checks in specific environments (e.g., conference rooms). This makes it suitable for both personal and enterprise-level applications.

It is an advantage of embodiments of the present invention that methods and systems are provided that allow for enhanced tamper detection with multi-spectrum analysis. More particularly, some embodiments of the present invention may combine visible and infrared spectrum artifacts, allowing for cross-validation of video content. This dual-spectrum approach increases robustness and ensures that both visible and IR tampering attempts are detected.

It is an advantage of embodiments of the present invention that versatile and scalable deployment of the authentication may be applied. Embodiments of the present invention may have a modular design allowing for deployment in various configurations, including single and multi-light setups, external and integrated systems, and centralized or distributed authentication platforms.

It is an advantage of embodiments of the present invention that methods and systems are provided that are future-proof against advancing threats. As deepfake and video manipulation technologies advance, this system remains effective by combining physical artifacts with adaptive, machine learning-driven algorithms. This makes it resilient to evolving attack techniques.

It is an advantage of embodiments of the present invention that the artificial light can be tuned on demand.

By integrating these features, the invention offers a transformative approach to video authenticity verification, addressing current limitations while setting a new standard for security in digital media communications.

The above objectives are accomplished by methods and systems according to the present invention.

In a first aspect, the present invention relates to a system for verifying the authenticity of video content. The system comprises a transmitter device including video capture functionality configured to capture video data of a scene and an artificial lighting device arranged to illuminate at least a portion of the scene during at least part of the capture by the video capture functionality. The system also comprises an authentication platform configured for

- controlling the artificial lighting device to introduce controlled, variable lighting changes into the scene according to predetermined instructions,
- receiving the captured video data from the video capture functionality;
- analyzing the captured video data to detect artifacts resulting from the controlled lighting changes; and
- comparing the detected artifacts with expected artifacts based on the predetermined instructions to determine the authenticity of the video content.

The transmitter device may be part of an electronic gaming system, such as for example a dice scanner. Alternatively or in addition thereto, the transmitter device may be part of a video communication system.

The transmitter device may be selected from the group consisting of a camera system, a mobile phone, a laptop, a tablet, and a video camera. The video capture functionality may in some embodiments be internal to the transmitter device. In other embodiments, the video capture functionality may be external to the transmitter device and connected to the transmitter device. The video capture functionality comprises a sensor selected from the group consisting of charge-coupled device (CCD), complementary metal-oxide-semiconductor (CMOS) sensor, and photodiode sensor, although embodiments are not limited thereto and other types of video capturing devices also may be used.

The artificial lighting device may be integrated into the transmitter device. Alternatively thereto the artificial lighting device may be external to the transmitter device. In some embodiments more than one artificial lighting device may be used, e.g. some or all being internal to the transmitter device, some or all being external to the transmitting device, or some being internal and some being external to the transmitting device. The one or more artificial lighting devices may comprise at least one light-emitting diode (LED) as a light-emitting component. The one or more artificial lighting device may emit light in at least one of the visible spectrum and the infrared spectrum. The one or more artificial lighting devices may comprise at least two light-emitting elements capable of emitting light at different wavelengths. The one or more artificial lighting devices may be capable of emitting light with variable intensity and color.

According to some embodiments, the authentication platform may be integrated into a video conferencing application. The authentication platform may be a separate entity connected to the transmitter device.

The authentication platform may be configured to determine the predetermined instructions based on hardware characteristics of the transmitter device.

The authentication platform may encrypt the predetermined instructions before transmitting them to the artificial lighting device.

The authentication platform may determine the type and duration of the controlled lighting changes.

The authentication platform may perform the authentication checks at intervals selected from continuous, periodic, predetermined, random, user-prompted, or any combination thereof.

The authentication platform may utilize machine learning or deep learning algorithms to determine the predetermined instructions.

The authentication platform may determine the predetermined instructions based on at least one of time of day, ambient light conditions, and characteristics of the transmitter device.

The authentication platform may include a timing module configured to determine the timing of authentication checks.

The communication between the authentication platform and the artificial lighting device may be secured using security protocols selected from SSL/TLS, VPN, DTLS, TCP/IP, UDP, or Kerberos.

The encryption algorithms used for securing communication may be selected from AES, SHA, Triple DES, RSA, or Twofish.

The captured video data may be received by the authentication platform in a compressed format. The captured video data may be transmitted to the authentication platform using a compression method that preserves artifacts resulting from the controlled lighting changes. The authentication platform may receive selected frames or blocks of data corresponding to periods during which the controlled lighting changes occur.

The authentication platform may analyze the captured video data using algorithms to detect the artifacts resulting from the controlled lighting changes.

The artifacts may include brightness variations between frames. The artifacts may include static or moving bands of higher and lower brightness values within frames.

The authentication platform may compare the movement or pattern of the artifacts across frames to the expected response.

The authentication platform may determine that the video content is authentic if the detected artifacts match the expected artifacts within a predetermined error margin.

The authentication platform may notify a receiver device of the authenticity of the video content.

The system may furthermore comprise a receiver device configured to display a status indicating the authenticity of the video content.

The controlled lighting changes may comprise flickering the artificial lighting device at a frequency between 0,01 Hz and 1000 Hz.

The artificial lighting device may be capable of switching the light-emitting component on and off at a frequency of at least 50 Hz.

The controlled lighting changes may comprise emitting bursts of light with durations between 1 microsecond and 5 seconds.

The controlled lighting changes may comprise varying the duration of the on and off states of the artificial lighting device.

The controlled lighting changes may comprise changing the color of the light emitted by the artificial lighting device.

The controlled lighting changes may be designed to produce artifacts that are difficult to replicate by an attacker.

The authentication platform may be configured to detect pre-stream tampering of the video content.

The system may be configured to detect replacement of a live video stream with a pre-recorded video.

The system may be configured to detect alterations of the video content using artificial intelligence technologies including deepfakes.

The system may be configured to detect remote control of a device where a video is transmitted as originating from the transmitter device but actually originates from a different device.

The system may be configured to detect replacement of a live video stream with a still image.

The authentication platform may optimise the type and duration of the controlled lighting changes based on effectiveness and data transfer considerations.

The transmitter device may be configured to correct or remove visible effects of the controlled lighting changes on a display towards a user of the transmitter device.

The transmitter device and receiver device may be connected via a communication network selected from the group consisting of the Internet, USB, Bluetooth, Zigbee, and LoRaWAN.

The captured video data may be compressed using a codec before being transmitted. The authentication platform may expect the captured video data in an uncompressed format.

The present invention also relates to an artificial lighting device for use in verifying the authenticity of video content, the artificial lighting device comprising a light-emitting component arranged to illuminate at least a portion of a scene during capture by video capture functionality of a transmitter device, a communication interface configured to receive control signals from an authentication platform and a controller configured to interpret the received control signals and to adjust the illumination of the light-emitting component to introduce controlled, variable lighting changes into the scene according to predetermined instructions, thereby causing artifacts in the captured video data that are detectable by the authentication platform.

The light-emitting component may comprise at least one light-emitting diode (LED). The light-emitting component may be capable of emitting light in at least one of the visible spectrum and the infrared spectrum. The light-emitting component may comprise at least two light sources capable of emitting light at different wavelengths. The controller may be a microcontroller. The artificial lighting device may further comprise a driver connected to the light-emitting component.

The artificial lighting device may include a clamping mechanism for attachment to the transmitter device. The artificial lighting device may include a stand allowing for positioning and directing of the light-emitting component to illuminate the scene. The communication interface may be a wired connection selected from USB, Ethernet, or Lightning connectors.

The communication interface may be a wireless connection selected from Wi-Fi, Bluetooth, LoRaWAN, or Zigbee protocols. The artificial lighting device may further comprise a power source independent from the transmitter device. The artificial lighting device may be capable of producing light with a luminous flux between 100 lumens and 5,000 lumens. The controller may be configured to adjust the light-emitting component to switch on and off at frequencies between 0,01 Hz and 1000 Hz.

The controller may be configured to produce short bursts of light with durations between 1 microsecond and 5 seconds. The controller may be configured to vary the duty cycle of the light-emitting component. The artificial lighting device may emit light with variable intensity and color.

The artificial lighting device may be controlled to produce lighting changes that are imperceptible to a human observer.

The authentication platform may be configured to verify the authenticity of video content by performing operations comprising:

- transmitting control signals to an artificial lighting device to introduce controlled, variable lighting changes into a scene during capture of the scene by video capture functionality of a transmitter device, according to predetermined instructions;
- receiving captured video data from the transmitter device;
- analyzing the captured video data to detect artifacts resulting from the controlled lighting changes; and
- comparing the detected artifacts with expected artifacts based on the predetermined instructions to determine the authenticity of the video content.

The authentication platform may encrypt the control signals before transmission to the artificial lighting device. The authentication platform may determine the predetermined instructions based on hardware characteristics of the transmitter device. The authentication platform may perform the operations at intervals selected from continuous, periodic, predetermined, random, user-prompted, or any combination thereof.

The authentication platform may utilize machine learning or deep learning algorithms to determine the control signals. The authentication platform may be integrated into a video conferencing application. The authentication platform may secure communications using security protocols selected from SSL/TLS, VPN, DTLS, TCP/IP, UDP, or Kerberos.

In another aspect, the present invention also relates to a method for verifying the authenticity of video content, the method comprising:

- controlling an artificial lighting device to introduce controlled, variable lighting changes into a scene during capture of video data of the scene by video capture functionality of a transmitter device, according to predetermined instructions;
- receiving the captured video data from the transmitter device;
- analyzing the captured video data to detect artifacts resulting from the controlled lighting changes; and
- comparing the detected artifacts with expected artifacts based on the predetermined instructions to determine the authenticity of the video content.

The method may further comprise encrypting the predetermined instructions before transmission to the artificial lighting device.

The controlled, variable lighting changes may comprise at least one of frequency modulation, amplitude modulation, duty cycle variation, and color modulation.

The method may further comprise determining the predetermined instructions based on hardware characteristics of the transmitter device.

The method may comprise analysing the captured video data using detecting artifacts including brightness variations between frames or within frames.

The method may further comprise notifying a receiver device of the authenticity of the video content.

In yet another aspect, the present invention also relates to a non-transitory computer-readable medium storing instructions that, when executed by one or more processors of an authentication platform, cause the authentication platform to perform the method as described above.

The instructions may cause the authentication platform to encrypt control signals before transmission to the artificial lighting device.

The instructions may cause the authentication platform to utilize machine learning or deep learning algorithms to determine the predetermined instructions.

The artificial lighting device may comprise an infrared light source and the video capture functionality includes an infrared-sensitive sensor.

In some embodiments, the artificial lighting device may be integrated into a display of the transmitter device. In some embodiments, the artificial lighting device may be integrated around a periphery of a display of the transmitter device.

The light-emitting component may emit light in a beam focused on a specific region of the scene.

The controlled lighting changes may be synchronized with the frame rate of the video capture functionality to produce detectable artifacts.

The authentication platform may compare infrared video data with visible spectrum video data to detect tampering.

The controlled lighting changes may be determined based on minimizing user impact while maximizing authentication effectiveness.

The artificial lighting device may further comprise a housing configured to limit emission of light to a desired portion of the scene.

The authentication platform may further be configured to adjust authentication parameters based on detected ambient light conditions in the captured video data.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

## Brief description of the drawings

The invention will now be described further, by way of example, with reference to the accompanying drawings, in which:

> FIG. 1 shows an exemplary system according to an embodiment of the present invention.
> FIG. 2a to FIG. 2c shows further exemplary systems according to embodiments of the present invention.
> FIG. 3 illustrates an authentication platform according to an embodiment of the present invention.
> FIG. 4 illustrates an example of a pattern as can be used in an embodiment of the present invention.

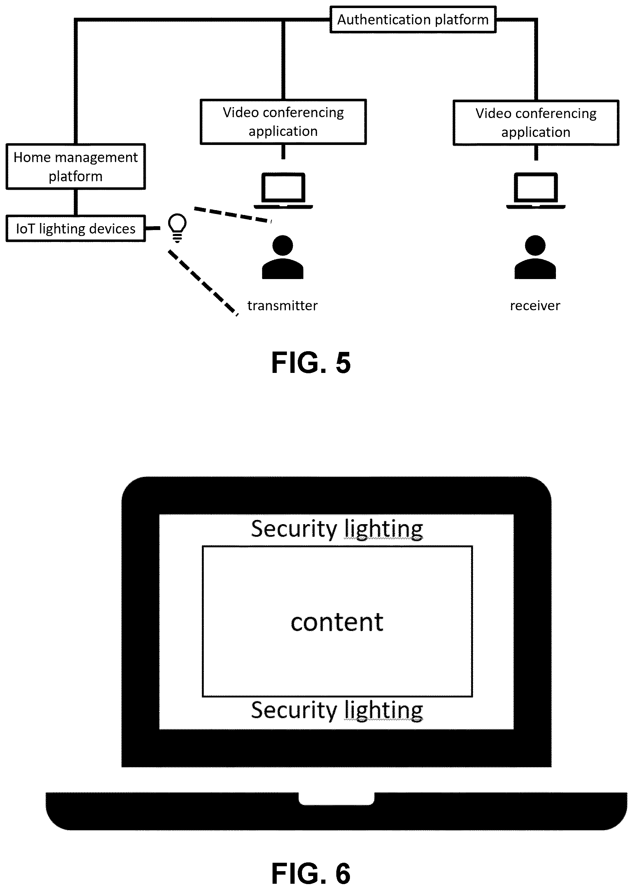

> FIG. 5 illustrates another exemplary system according to an embodiment of the present invention.
> FIG. 6 illustrate an example of an integrated artificial lighting device, according to an embodiment of the present invention.
> FIG. 7 illustrates an authentication system for authentication of video data between two systems.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

## Detailed description of illustrative embodiments

The present invention will be described with respect to particular embodiments and with reference to certain drawings but the invention is not limited thereto but only by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

As used herein, and unless otherwise specified, the term "video data", "video streaming data", or alike means transmitting a series of images or image frames at a fixed, variable and/or defined frequency. It may include transmission for human to human communication purposes, such as video conferencing, and/or it may include transmission between two systems, where not necessarily human interaction or human involvement is required.

As used herein, and unless otherwise specified, the term "authentication platform" refers to a system or software application for performing the necessary steps for the authentication. The authentication platform can be implemented on servers, cloud services, or local computing devices.

As used herein, and unless otherwise specified, the term "video conferencing device" means any device equipped with video capture and display functionalities used primarily for real-time video communication between users. Examples include webcams connected to computers, dedicated video conferencing systems, smartphones, or tablets running video call applications.

As used herein, and unless otherwise specified, the term "controller" refers to the processing unit within the artificial lighting device that interprets the received control signals and adjusts the illumination accordingly. The controller can be a microprocessor, microcontroller, or any embedded system capable of executing instructions.

As used herein, and unless otherwise specified, the term "non-transitory computer-readable medium" refers to any physical medium that can store data and is not a signal or carrier wave. Examples include hard drives, solid-state drives, flash memory devices, optical discs (CDs, DVDs, Blu-ray discs), magnetic tapes, or any other tangible storage devices capable of storing computer-executable instructions.

In one aspect, the present invention relates to a system for verifying the authenticity of video content, such as for example video streaming data. The system may be especially suitable when implemented in an electronic gaming device such as for example an electronic dice scanner or may be especially suitable when implemented in a video conferencing system. According to embodiments of the present invention, the system comprises a transmitter device including video capture functionality configured to capture video data of a scene and also comprises an artificial lighting device arranged to illuminate at least a portion of the scene during at least part of the capture by the video capture functionality. The system also comprises an authentication platform configured to control the artificial lighting device to introduce controlled, variable lighting changes into the scene according to predetermined instructions, to receive the captured video data from the video capture functionality and to analyse the captured video data to detect artifacts resulting from the controlled lighting changes. The authentication platform also is configured to compare the detected artifacts with expected artifacts based on the predetermined instructions to determine the authenticity of the video content.

By way of illustration, embodiments of the present invention not being limited thereto, examples, possible characteristics and features of components are described below.

In the exemplary system, video artifacts are introduced in video communication between at least two devices, namely a transmitter, and a receiver. The transmitter being a device capable of at least registering video, such as a camera system, mobile phone, laptop, tablet, .... The transmitter has internal or external video recording functionality, the latter being possible due to an external device connected to the transmitter, such as an external camera attached to a PC or laptop. Internal video recording functionality may be a camera system such as a security camera, or a laptop with integrated camera. The receiver may be capable of at least displaying video, such as a display, personal computer, laptop, smartphone, streaming device, ... The receiver may also possess the same functionality as the transmitter, which would make the system two-way. This embodiment is explained as a one-way system for legibility, the two-way system is easily derivable by someone skilled in the arts. The receiving device may be connected to at least 1 transmitting device, and the transmitting device may be connected to at least 1 receiving device. For example, a transmitter may be connected to 3 receivers. The artifacts explained further in this document are introduced by an artificial lighting device, the subject of the present invention, that lights at least part of the scene captured by the transmitter. A receiving device may be connected to a transmitting device via a wireless or wired data connection. This connection may be an internet connection, USB, Bluetooth, Zigbee, or LoRaWAN.

According to embodiments of the present invention, the receiver may instruct an authentication platform to check the authenticity of the video being transmitted by the transmitter in question. The authenticity of the data sent by a transmitter is secured by briefly, periodically and/or continuously changing the operation of the artificial lighting device of a transmitter.

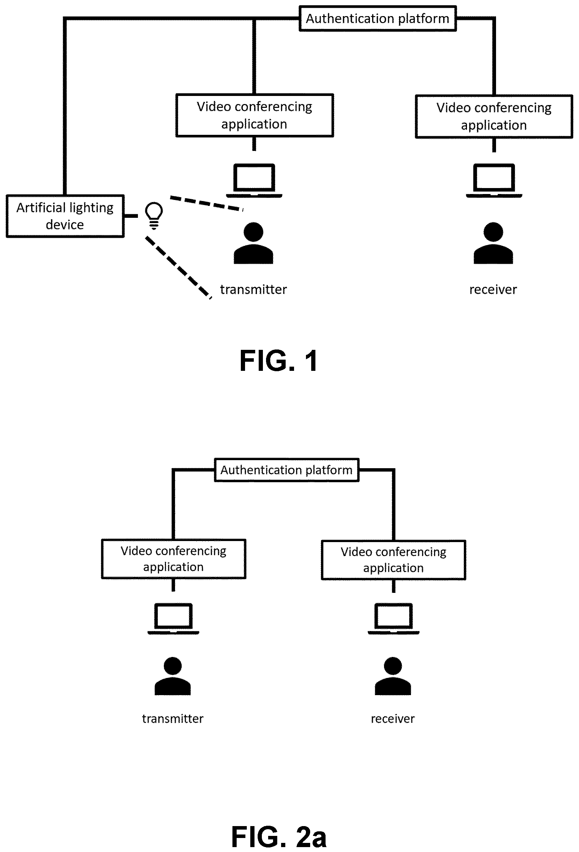

The scene captured by the video recording functionality of a transmitter is at least partly lit by an artificial lighting device. Fig. 1 shows an example setup, where the single transmitter has a separate artificial lighting device lighting part of the scene, while using a video conferencing application on their device.

The receiver may send a signal to the authentication platform via connected functionality in their video conferencing software. In another embodiment, the authentication platform may be a completely separate entity. In the latter case, the transmitter and the receiver both need to connect to the authentication platform directly to allow the authenticity check to occur. In the former case, the details of the hardware setup of both parties are available to the independent authentication platform through access via the video conferencing software.

In another embodiment, the authentication software is fully integrated in the video conferencing software of both parties. In yet another embodiment, the authentication platform logic is integrated in either the transmitting or the receiving device.

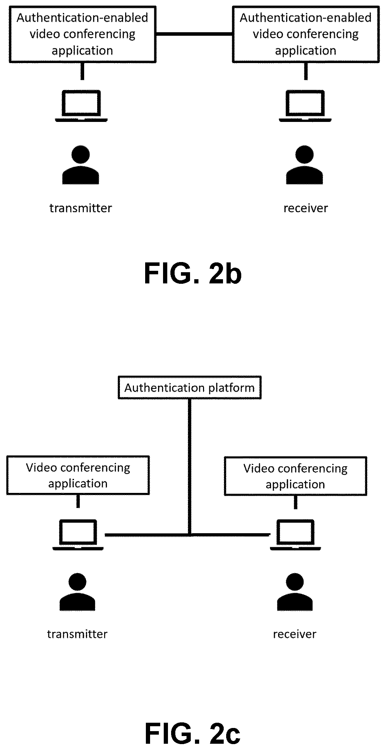

Fig. 2 shows different embodiments for the integration of the authentication platform in a video conferencing application. Fig. 2A shows the authentication platform fully integrated, Fig. 2B shows integrated functionality through the video conferencing application, but the authentication platform being a separate entity, for example owned and operated by a different company. Fig 2C shows the authentication platform fully separated from the application. In this case, the devices are connected to the authentication platform separately.

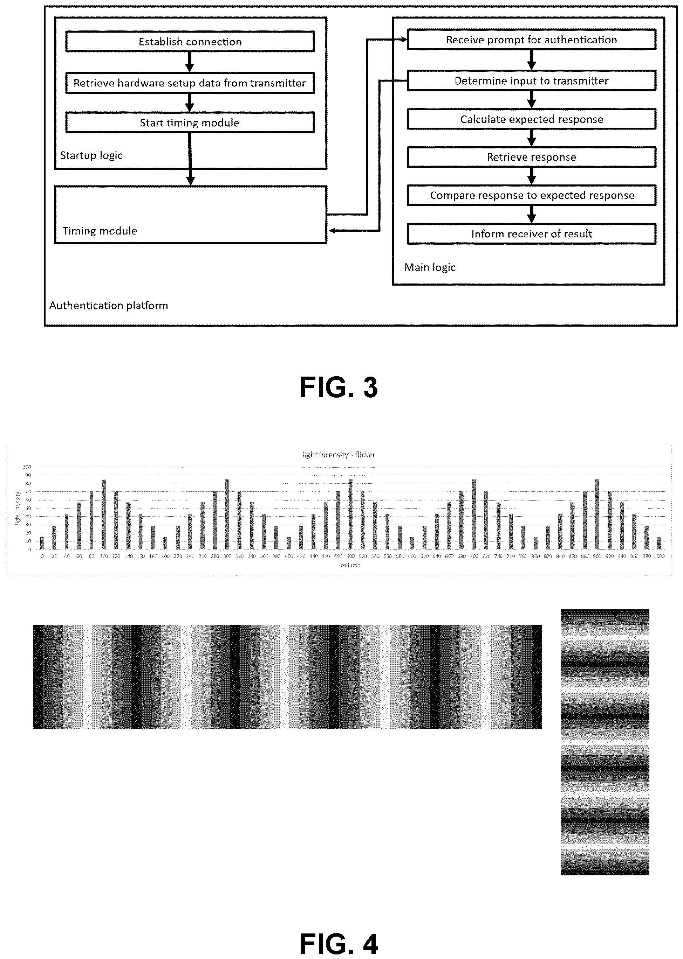

The signal sent to the authentication platform instructs the platform to carry out one or multiple checks on the connected device. The logic of the authentication platform, whether it is integrated in a video conferencing application or as a separate entity, is shown in FIG. 3. After starting up, the startup logic retrieves the necessary hardware setup details from the transmitting party. These hardware setup details may include but are not limited to the framerate, resolution, mains voltage, and camera type. Alternatively, the hardware details of the transmitting device are already known to the authentication platform, for example because of a calibration performed during the setup of the system.

According to an exemplary embodiment, typically a timing module may be started. The timing module may be responsible for instructing the main logic when a new check must be carried out. When the timing module of the authentication platform prompts a new authentication, the main logic of the authentication platform determines the type and duration of the authentication check to be performed. This authentication check can be performed at set intervals, at random intervals, continuously, when prompted by the user, or any combination of these timings.

The type of authentication check may be a flicker at a fixed frequency for a given duration, for example 100 Hz for 2 seconds. A flicker means the on and off state of the light source have approximately the same duration. Alternatively, the on or off states of the artificial lighting device may be shorter or longer than one another, creating shorter light pulses relative to longer intervals, for example the artificial lighting device turns on for 20ms, and off for 2s. This pattern may, but does not necessarily, repeat itself. The main logic may determine a series of durations for the on and/or off states to be carried out by the artificial lighting device.

The duration of the authentication check can vary significantly. In continuous check cases, this parameter is not relevant and the timing module is bypassed, except for interruptions by the user. In discontinuous cases, depending on the determined time between checks, any time between the minimum time to carry out the chosen type of authentication and the time between checks is viable.

Alternatively, when the main logic has determined a duration for the check, the duration is handed over to the timing module to determine the time to the next check without interfering with the current check being carried out.

The determination of the type and frequency of the check may be at least in part determined by machine learning or deep learning algorithms. These techniques may be utilised to optimize the expected response based on the hardware details of the transmitter's video capture functionality. Additional sets of parameters, such as average light value in the frame, average light value on a user's face or a different specific part of the scene, colour intensity in parts of the scene, may be checked by retrieving a first image or set of images from the transmitter. The effect of one or similar lighting options by the artificial lighting device may be assessed by shortly flashing the artificial lighting device to gather data for the authentication checks to be tailored to the specific setup.

When the type and duration of the authentication check is determined, the authentication platform determines the expected response from the transmitter, based on the details available of the video capturing functionality of the transmitting device. These details, which may include but are not limited to the framerate, resolution, and camera type, allow the authentication platform to calculate how a video recording system with these parameters should react to the input it is about to give the artificial lighting device. Based on the expected response, the authentication platform also determines which part of the data collected by the video recording device it needs to extract the features and carry out the authentication. For example, in the case where the artificial lighting device is instructed to turn on for 20ms, wait for 2s, and turn on for 30ms, and turn off again, the authentication platform may determine that the data it needs is as follows. The artificial lighting device turns on a first time at time x, the authentication platforms collects 0,5 seconds before time x (to capture the change), and stops capturing 0,5s after time x. The authentication platform does not use 1s of video capture between the 2 bursts, and starts extracting data again 0,5s before the second burst of light. 0,5s after the artificial lighting device has completed it instruction, the data collection by the authentication platform stops again.

Additionally, the hard- and software details from the transmitting device also inform the authentication platform which inputs it can use to optimize the effectiveness of the authenticity check, e.g. by minimizing reproducibility, minimizing user impact, maximising uniqueness, optimising data requirements, etc. In the example above, the authentication platform receives a multitude of frames, and a fairly significant amount of data. By allowing the authentication platform to optimize the type and duration of checks based on the effectiveness of the checks and minimising data transfer, more efficient methods can be constructed.

Once an instruction within these parameters has been formed, the instruction is encrypted, and sent to the artificial lighting device. The artificial lighting device may be connected to the authentication platform separately, or it may piggyback off of the existing connection through a communication program or separate authentication application as described earlier. The artificial lighting device receives the input, performs the requested changes, and the authentication platform receives at least one frame or block of data for authentication.

These frames or blocks of data may be made available to the authentication platform in a compressed format, so that the same data may be used in transmission to the authentication platform than in transmission to the receiving party. Alternatively, should the transmission's compression method remove artifacts from the video or image data, different compression methods, such as H.264/AVC, H.265/HEVC, VP9, or AV1 may be used to avoid or reduce this issue in transmission to the authentication platform.

The one or more frames or blocks of data are analysed for video artefacts by the authentication platform, and the extracted video artefacts are compared to the expected artefacts calculated. If the extracted artifacts match the expected artefacts within a predetermined error margin, the one or more frames or blocks of data are determined to be authentic.

The receiver is informed of the authenticity, and a status may be displayed to the user to let them know the video has been checked and is authentic. Alternatively, the user is only informed if the authenticity of the video is deemed not authentic by the authentication platform.

In one exemplary embodiment, the artificial lighting device may consist of a power supply, driver and one or more light emitting elements. The artificial lighting device may draw power from the transmitting device, such as through a USB cable. The artificial lighting device may contain or be connected to a separate power supply. The artificial lighting device may comprise a clamping mechanism so it can be attached to the transmitting device. The artificial lighting device may also comprise a multi-legged stand such as a tripod, that allows for positioning and/or pointing of the device to light a user or scene correctly.

It is most beneficial for the light emitting element inside the artificial lighting device to allow for fast switching between on and off states, so that the impact on the scene and/or the user when introducing artefacts is minimal. In practice, this means LEDs are the most likely technology to be used for the light emitting device. Other light emitting elements that are sufficiently performant in terms of switching speed may also be used. Preferably, the light emitting element inside the artificial lighting device is capable of switching off and on at minimally 50 Hz.

The artificial lighting device may emit a single colour of light, such as white, or a colour that allows more contrast to be generated, or is better picked up by the sensor, such as red or green. The artificial lighting device may be controlled to switch colours if the light emitting device inside supports this. The ability to change the colour of light increases the possibilities for the authentication function, since colours may be introduced into the scene that are hard to reproduce or tamper with. The video recording functionality of the transmitter is not required to capture images in full colour. Even if it captures in full colour, data transmission may be limited by transmitting images to the authentication platform in black and white.

In some embodiments, two or more artificial lighting devices may be used. Such artificial lighting devices may operate in the same or in different spectral ranges, as will be illustrated in different exemplary embodiments.

In one exemplary embodiment, the artificial lighting device is an attachment that may be used in conjunction with a device fit to be a transmitter. The artificial lighting device may be connected wirelessly via Wi-Fi, Bluetooth, LoRaWan, Zigbee, or other wireless communication standards. Alternatively or additionally, the artificial lighting device may have a wired connection via a USB, ethernet, lightning, or any other data transmission cable to the device in question. The connection with the authentication platform may be secured with protocols such as SSL/TLS, VPN, DTLS, TCP, UDP, or Kerberos. Encryption may be performed using encryption algorithms such as AES, SHA, Triple DES, RSA, or Twofish. In another exemplary embodiment, the artificial lighting device is integrated into the device, similar to the flashlight on a smartphone. The artificial lighting device must be integrated in such a way that a scene being filmed with the camera is affected when the light source of the artificial lighting device is lit. For example, in a laptop, where the camera facing the user is generally located centrally above the display, the artificial lighting device may be integrated around this area, ensuring the light emitting from the artificial lighting device reaches the user and/or their environment. An example of the orientation in which the device is used can be found in EP0738080A1, where a light source is used to light the user of a video conferencing program. Important to note in the comparison to EP0738080A1, is that the artificial lighting device in this text facilitates security mechanisms, and has the ability to alter the method of operation of the light source inside the device, while the device in EP0738080A1 is a simple light source.

The driver for the LED light can, depending on the input the driver receives, make the light flicker at a range of frequencies, at least 1 distinct frequency, or at least 2 distinct frequencies, within the physical capabilities of the lighting element. Additionally, the driver may allow the LED to emit light in short bursts of varying length. The artificial lighting device may produce fixed flicker with a frequency between 0 Hz and 1000 Hz, and produce short bursts of light with lengths between $1\mu s$ and 5s. The case of 0Hz would imply a constant light source (without the effects of mains voltage). The frequency may be adapted to users with a sensitivity to flashing or strobing lights, such as people suffering from epilepsy.

The artificial lighting device may emit light with a strength between 100 and 5.000 lumen. Depending on the type of light emitting technology used, the power requirements to produce this light may vary. For LED lights for example, the power of the artificial lighting device may be less than 50 Watts. In lower power applications, the power of the artificial lighting device may be less than 25 Watts. It is important the device has sufficient light emission, so that it is visible in the captured footage. If the lighting in the scene is bright, more light is needed for the effects not be drowned in the already present light. In these cases, the previously discussed embodiment where multiple colours are available, offers more options than a single-colour variant.

The oscillation or driving of the light source may be performed by active components such as a microcontroller or a microprocessor, which may be connected to a driver to power the lighting element.

According to an exemplary embodiment, the artificial lighting device's processing capabilities may comprise a microcontroller and a driver. The microcontroller receives and decodes the input it receives from the authentication platform, and instructs the driver accordingly. In another exemplary embodiment, the artificial lighting device's processing capabilities may comprise at least a microprocessor and a driver. The microprocessor receives a prompt from the authentication platform for at least the timing of when a check must be carried out, and performs at least part of the processing from the main logic of the authentication platform. Including at least part of the processing inside the device may reduce latency, and provide less opportunity for intercepting the prompt to the artificial lighting device.

When using the artificial lighting device in conjunction with other devices, such as the dice scanning device, as mentioned in WO2022084421, where a video recording device may also be used, either integrated in a dice scanning device, or connected as an external device, the video capturing components present in or connected to the device may also be controlled to introduce artifacts in the registered video. This may relate to the scanner of the dice scanning device, as well as to the internal or external camera for filming the users. Similar to US2023385385A1, a set of variables in the video capture component may be adapted to alter the resulting video. In conjunction with the artificial lighting device however, a very specific method of introducing and recognising patterns is available. The added control of the video recording equipment allows more variability in the generated patterns, since they can be combined with the possible variations in the light source. Furthermore, this increases security due to the wider range of alterations possible, and -if the instructions for the video recording equipment and the artificial lighting device are encrypted and transmitted individually- one would need to intercept 2 encrypted signals, one to the artificial lighting device, and one to the integrated or external video capture system of the device in question.

In a further exemplary embodiment, video artifacts are introduced in video communication between at least two devices, namely a transmitter, and a receiver. The transmitter being a device capable of at least registering video, such as a camera system, mobile phone, laptop, tablet, .... Video artifacts are introduced in video communication between two devices by briefly and/or periodically changing the operation of the video recording device of the second party in question.

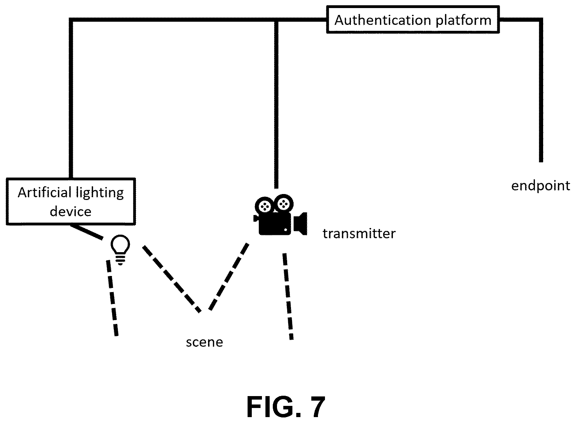

The described embodiments may be with or without the direct involvement of users on both sides (transmitter & receiver) of the system. In this embodiment, a device acting as a transmitter, with integrated or connected functionality of the artificial lighting device, and integrated or connected functionality of a video recording device, may light and record a scene according to the specifications of the authentication platform, and introduce flicker in a scene not necessarily populated by active participants. The receiver on their part may also be an automated system, which informs an endpoint for the validity of the recording. The endpoint may be a different software platform, a server, or a user. For example, the lighting and recording capabilities of the imager from the dice scanning device as mentioned in WO2022084421 may act as the artificial lighting device and recording device respectively, where the scene is the dice thrown on the surface of the imager, lit by the backlight of the device and the endpoint for the authentication platform a web server hosting the game being played, or the user of the device. FIG. 7 illustrates an authentication system for authentication of video data between two systems.

Other example applications include securing remote video feeds of production lines.

By way of illustration, embodiments of the present invention not being limited thereto, an example of how an artificial lighting device can be controlled is given below.

In the example discussed, it is supposed that during normal operation, the camera of the transmitter operates at 20 frames per second, with the artificial lighting device lighting the scene with a constant level of illumination. This will mean no banding or flickering is visible in the captured footage.

The artificial lighting device is now instructed to flicker at 100 times per second, or 100 Hz. If the image captured by the video recording functionality of the transmitter consists of 1000 lines, being read out at 20 fps, 20.000 lines are read out each second. This means it takes 50 microseconds for 1 line to be read out.

If the artificial lighting device flickers at 100 Hz, it takes 10.000 microseconds to complete a single off-on-off cycle for the artificial light source.

This means the transmitter will record 200 (10.000/50) lines before the light intensity cycle of the backlight reaches it starting state. The artificial light will turn on and off exactly 5 times during the formation of a single frame. (1000/200). This will cause a banded pattern with 5 dark and light bands to appear on at least part of the screen. Since in this example the speed of the video recording device sensor (20Hz) is a multiple of the speed of the artificial light flicker (100 Hz), the pattern on the video output should be stationary, and look like the patterns shown in FIG. 4.

The orientation of the pattern is dependent on the orientation of the lines being read out on the sensor of the transmitter. In this example, the lines are read out vertically, i.e. each vertical line is read out simultaneously, while the individual vertical lines are read out sequentially. If the direction was rotated 90°, the lines would be horizontal.

These artifacts are recorded as regular video, and one or more frames are accessed by the authentication platform. Here, the response is extracted and checked, confirming whether or not the video is authentic. Since the instruction for how the video recording device should be changed is encrypted, it is unknown to the user of the device in what way the operation will change, and therefore much harder to adapt any doctored live footage with the correct camera operation.

If the user experience is expected to be kept at its previous level, known techniques may be used to correct or remove the effects which may be visible on the footage in the display towards the user. This ensures the user is unaware that authentication checks are being carried out, both for ease of use and security.

In the example, when a constant frequency flicker and a constant frequency or framerate camera system are used, the movement between frames may also be calculated by dividing the 2 frequencies. A flicker frequency of 100 Hz and a camera framerate of 20 Hz yields a pattern with 100Hz/20Hz = 5 bands. If number of patterns is whole, the pattern is stationary. If the number of patterns is not whole, it moves across the display.

This movement may also be calculated; for example, the flicker speed is set to 105 Hz. If the camera is operating at 20 Hz, 5.25 patterns are visible in a single frame. If the light source and sensor are synchronized (light starts in off state at line 0 in sensor, see above), only 25% of the final pattern is visible in the image. The following frame will start with the remaining 75% of the off-on cycle, and the entire pattern will appear to move left at the speed specified by the equations below:

$$f_l = frequency\ of\ light\ flicker$$

$$f_c = frequency\ of\ camera\ sensor\ lines$$

$$f_f = frequency\ of\ camera\ frames$$

$$N = lines\ in\ camera\ sensor$$

$$L = sensor\ lines\ per\ light\ cycle$$

$$R = pattern\ repetitions\ per\ frame$$

$$v = pattern\ speed\ (\frac{lines}{frame})$$

$$f_c = N * f_f$$

$$L = \frac{f_c}{f_l}$$

$$R = \frac{f_l}{f_f}$$

$$v = (R - \lfloor R \rfloor) * L$$

In this case, with N = 1000, $f_f$ = 20*Hz*, and $f_l$ = 105*Hz*:

$$f_c = 1000 * 20Hz = 20.000\ Hz$$

$$L = \frac{20.000Hz}{105Hz} = 190,4762$$

$$R = \frac{105Hz}{20Hz} = 5,25$$

$$v = (5,25 - 5) * 190,4762 = 47,6190$$

The pattern will move across the screen shifting 47,6190 sensor lines every frame. Different effects may be observed when sensor lines are not registering light during the entire frame time.

In one example, a system for authenticating video streams, such as between parties when using video conferencing tools, by utilising a separate lighting and camera system that emits and captures light in the infrared spectrum. The IR artificial lighting device in this example consists of the same components as discussed in the first aspect, but the light emitting element in this case emits light in the infrared spectrum. Since most video recording devices present in the devices that are the subject of this invention do not allow light registration in the infrared spectrum, a separate camera system, or an additional video recording element inside the internal or external video recording element of an existing device such as a laptop, may be used to capture images in the infrared spectrum. In some embodiments, video artifacts are introduced in video communication between two devices, namely a transmitter, and a receiver. The transmitter thereby may be a device capable of at least registering video, such as a mobile phone, laptop, tablet, ..... The transmitter may have internal or external video recording functionality in the infrared spectrum, the latter being possible due to an external device connected to the transmitter, such as an external infrared camera. The receiver may be capable of at least displaying video, such as a personal computer, laptop, smartphone, streaming device, ... The receiver may also possess the same functionality as the transmitter, which would make the system two-way. The artifacts may be introduced by an artificial infrared lighting device, that lights at least part of the scene captured by the transmitter. In the example discussed, the receiver is connected to the transmitter via a wireless or wired data connection. This connection may be an internet connection, USB, Bluetooth, Zigbee, or LoRaWAN. The transmitter and instructs an authentication platform to check the authenticity of the video being transmitted by the transmitter in question. The authenticity of the data sent by the transmitter is secured by briefly and/or periodically changing the operation of the artificial lighting device of the transmitter. In this example, the use of infrared light is possible due to the artificial lighting device emitting light in the infrared spectrum. This light has a series of benefits over a system operating in the visible light spectrum. First, the user is not impacted by any method of authenticating the video stream, since infrared light is not visible to the human eye. Secondly, specific ranges of infrared light, such as Near-Infrared (NIR), are widely used at distances and intensities comparable to the ones that are being proposed here, and have no ill effects on a user's health. Moreover, since the infrared light is not visible to the user, the system does not need to be limited to frequencies and patterns that are faster than flicker frequencies that can be seen by humans. Finally, the infrared light does not interfere with visible light, and should not have an effect on the visible light video recording functionality that is used for the video transmission by the transmitter. In some embodiments, a NIR video recording device may be already present in the transmitting device, which is possible in high-end laptops. Alternatively, the NIR video recording functionality may be implemented by using a third-party device, or integrated in the artificial lighting device with infrared capabilities. The emission and capture of infrared light in specific patterns, as dictated by the authentication platform to the artificial lighting device, may be in the Near Infrared spectrum, generally limited to between 780 and 2500nm wavelengths. In one embodiment of the present invention, the emitted and captured wavelengths is limited to between 780 and 2500nm. The light emitting device inside the artificial lighting device may be a light emitting diode or LED in the infrared spectrum, also called InfraRed Emitting Diodes or IRED's. The artificial lighting device may emit light in a specific direction to specifically target a zone most likely targeted when tampering with the video, e.g. a user's head to protect against deepfake attacks. The artificial lighting device's light emitting capabilities may be limited in beam angle to focus the light on locations of interest, depending on the application. The manner in which the authenticity check is carried out is another example similar to the embodiment of this invention where visible light is used. The receiver or their video conferencing software requests an authentication check from the platform or its integrated functionality, the authentication platform sends an instruction to the light and video devices, and receives the resulting frame(s). The effects of the lighting scheme are extracted and analysed, and it is determined if the footage is authentic. When using Infrared light, additional checks may be necessary, since if the authentication platform deems the footage to be authentic according to the method described in the previous paragraph, there may still be a discrepancy between the IR video and the regular video, if only the visible light spectrum video has been tampered with. It is therefore beneficial if both the visible and infrared spectrum video recording devices are located physically close to one another so that the angle is similar, and the footage can be compared by a separate module in the authentication platform to see if any alterations have been made. This check should be carried out first, and provides a first layer of security. The addition of flicker improves the robustness of the system even further.

In another example, two or more artificial lighting devices are used, such as for example one in the infrared (IR) range and one in the visible range. The artificial lighting device thus may comprise more than one light emitting element, one of these elements operating in the visible light spectrum, and another of these elements operating in the infrared light spectrum. In this embodiment, since both light sources and cameras do not interfere with each other, multiple security checks may be carried out simultaneously or alternatively, to increase the number of choices the authentication platform has to perform an authentication check on the video stream of the transmitter.

In yet another example, two or more artificial lighting devices are used, which are all in the visible range. The artificial lighting device hence may comprise more than one light emitting element, with at least two of these elements operating in the visible light spectrum. In this embodiment, the different light sources may be controlled simultaneously to produce the same output, or an individually different output. For example, a first light emitting element in the artificial lighting device may light the scene in a particular colour, while a second light emitting element in the artificial lighting device may flicker at a specific frequency and in a different colour. The combination of multiple light sources increase variability and the possibility for the system to generate unique and recognizable watermarks to add to a video. Additionally, the added light source may increase the total amount of light emitted by the artificial lighting device, allowing a higher contrast to be produced against a bright scene.

In yet another example, video artifacts are introduced in video communication between at least two devices, namely a transmitter, and a receiver. The transmitter being a device capable of at least registering video, such as a camera system, mobile phone, laptop, tablet, .... Video artifacts are introduced in video communication between two devices by briefly and/or periodically changing the operation of light-emitting IoT devices connected to the power grid, such as smart lights. In this example, the authentication platform has access to the lighting system in the room the user is active, and the authentication platform may drive the operation of the lighting system, to carry out authentication checks on the user. In this example, the authentication platform sends instructions to a home management platform managing light sources at the location of the transmitter, which in turn controls at least one IoT lighting device capable of providing functionality as described for the artificial lighting device in previous embodiments. This functionality includes flickering the light emitting element at a range of specific frequencies, and/or pulsing the light emitting element at specific intervals. The example may be applied in rooms where a secure video connection is set up, such as conference rooms in businesses, that are often used to host videocalls where secure connections are key.

In one exemplary embodiment, video artifacts are introduced in video communication between two devices, namely a transmitter, and a receiver. The transmitter being capable of at least registering video and lighting at least part of the scene captured by the camera through the use of a video display functionality, such as a mobile phone, a laptop, a tablet, ... and the receiver being capable of at least displaying video, such as a display, projector, but also phone, tablet, laptop, ... The artifacts are introduced by adapting a portion of the backlight or display of the transmitting device to light the scene in a significant way, that may be recognizable by the video capture functionality as described before. The display may be a display using a pixelated backlight or self-lit display, such as OLED, MicroLED, LED or QLED.

In US9871963B2, the entire backlight is adapted to light a scene to improve the lighting conditions to allow better images to be taken with the front camera of a device with a display. It is an embodiment of the present invention to allow at least part of the display of a device used as a transmitter to be used in a manner similar to the artificial lighting device from the previous embodiments, i.e. flicker at specific rates, emit light in pulses without a static frequency, change colours, .... The backlight or display is instructed by the authentication platform, to provide the lighting conditions necessary to carry out the authentication checks similar to those enabled in the previous embodiments. In one embodiment of the present invention, the entire display of the device may flicker at a specific frequency or pattern in a specific colour. In another embodiment, a part of the display, between 10 and 50% of the entire display area, such as a border around the display, may be set to a specific operation (flickering, bursts of light, colour...) that may be captured by the transmitter's video recording functionality. Only using part of the display for these purposes minimizes the impact on the users, since the display may still be used for other purposes, such as displaying an incoming signal through a video conferencing application.

In yet another exemplary embodiment, the security lighting is integrated in the device in the area around the display, but is not part of the display, contrary to the previous embodiment. This allows more freedom in the choice of lighting element (such as type, power, colour, ..., according to the specifications from previous embodiments), and is a technically easier solution to implement.

In another aspect, the present invention relates to an artificial lighting device for use in verifying the authenticity of video content. The artificial lighting device comprises a light-emitting component arranged to illuminate at least a portion of a scene during capture by video capture functionality of a transmitter device, a communication interface configured to receive control signals from an authentication platform and a controller configured to interpret the received control signals and to adjust the illumination of the light-emitting component to introduce controlled, variable lighting changes into the scene according to predetermined instructions, thereby causing artifacts in the captured video data that are detectable by the authentication platform. The light-emitting component may comprise at least two light sources capable of emitting light at different wavelengths and/or may comprise a power source independent from the transmitter device. Other features, advantages and elements may be as described in the first aspect.

In yet another aspect, the present invention relates to an authentication platform configured to verify the authenticity of video content by performing operations. The authentication platform may perform the step of transmitting control signals to an artificial lighting device to introduce controlled, variable lighting changes into a scene during capture of the scene by video capture functionality of a transmitter device, according to predetermined instructions, the step of receiving captured video data from the transmitter device and the step of analysing the captured video data to detect artifacts resulting from the controlled lighting changes. The authentication platform also may perform the step of comparing the detected artifacts with expected artifacts based on the predetermined instructions to determine the authenticity of the video content. The authentication platform also may be configured to generate the predetermined instructions based on at least one of: time of day, ambient light conditions, and characteristics of the transmitter device. It may also be further configured to perform the operations at variable intervals, at predetermined moments in time and/or based on user prompts. The authentication platform also comprise features, advantages and elements as described in the first aspect.

In still another aspect, the present invention relates to a method for verifying the authenticity of video content. The method comprises controlling an artificial lighting device to introduce controlled, variable lighting changes into a scene during capture of video data of the scene by video capture functionality of a transmitter device, according to predetermined instructions, receiving the captured video data from the transmitter device and analyzing the captured video data to detect artifacts resulting from the controlled lighting changes. The method also may comprise comparing the detected artifacts with expected artifacts based on the predetermined instructions to determine the authenticity of the video content. The method may further comprise steps corresponding with features and advantages of elements of systems as described in the first aspect.

It is to be noted that different embodiments described above may be combined, as preferred. While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1. A system for verifying the authenticity of video content, comprising:

   - a transmitter device including video capture functionality configured to capture video data of a scene;
   - an artificial lighting device arranged to illuminate at least a portion of the scene during at least part of the capture by the video capture functionality;
   - an authentication platform configured to:

     - control the artificial lighting device to introduce controlled, variable lighting changes into the scene according to predetermined instructions;
     - receive the captured video data from the video capture functionality;
     - analyze the captured video data to detect artifacts resulting from the controlled lighting changes; and
     - compare the detected artifacts with expected artifacts based on the predetermined instructions to determine the authenticity of the video content.

2. The system according to claim 1, wherein the transmitter device is part of an electronic gaming device or is part of a video conferencing device.

3. The system according to claim 1, wherein the artificial lighting device comprises a light-emitting component capable of emitting light in at least one of the visible spectrum and the infrared spectrum.

4. The system according to claim 1 or 2, wherein the authentication platform is further configured to encrypt the predetermined instructions before transmission to the artificial lighting device.

5. The system according to any one of the preceding claims, wherein the artificial lighting device is configured to produce light changes with frequencies between 0,01 Hz and 1000 Hz.

6. The system according to any one of the preceding claims, wherein the authentication platform is further configured to determine the predetermined instructions based on hardware characteristics of the transmitter device.

7. An artificial lighting device for use in verifying the authenticity of video content, the artificial lighting device comprising:

   - a light-emitting component arranged to illuminate at least a portion of a scene during capture by video capture functionality of a transmitter device;
   - a communication interface configured to receive control signals from an authentication platform;
   - a controller configured to:

     - interpret the received control signals; and
     - adjust the illumination of the light-emitting component to introduce controlled, variable lighting changes into the scene according to predetermined instructions, thereby causing artifacts in the captured video data that are detectable by the authentication platform.

8. The artificial lighting device according to claim 6, wherein the light-emitting component comprises at least two light sources capable of emitting light at different wavelengths and/or comprises a power source independent from the transmitter device.

9. An authentication platform configured to verify the authenticity of video content by performing operations comprising:

- transmitting control signals to an artificial lighting device to introduce controlled, variable lighting changes into a scene during capture of the scene by video capture functionality of a transmitter device, according to predetermined instructions;
- receiving captured video data from the transmitter device;
- analyzing the captured video data to detect artifacts resulting from the controlled lighting changes; and
- comparing the detected artifacts with expected artifacts based on the predetermined instructions to determine the authenticity of the video content.

10. The authentication platform according to claim 9, further configured to generate the predetermined instructions based on at least one of: time of day, ambient light conditions, and characteristics of the transmitter device.

11. The authentication platform according to claim 9 or 10, further configured to perform the operations at variable intervals, at predetermined moments in time and/or based on user prompts.

12. A method for verifying the authenticity of video content, the method comprising:

- controlling an artificial lighting device to introduce controlled, variable lighting changes into a scene during capture of video data of the scene by video capture functionality of a transmitter device, according to predetermined instructions;
- receiving the captured video data from the transmitter device;
- analysing the captured video data to detect artifacts resulting from the controlled lighting changes; and
- comparing the detected artifacts with expected artifacts based on the predetermined instructions to determine the authenticity of the video content.

13. The method according to claim 12, further comprising encrypting the predetermined instructions before transmission to the artificial lighting device.

14. The method according to claim 12 or 13, wherein the controlled, variable lighting changes comprise at least one of: frequency modulation, amplitude modulation, and colour modulation.

15. A non-transitory computer-readable medium storing instructions that, when executed by one or more processors of an authentication platform, cause the authentication platform to perform the method according to any one of claims 12 to 14.

Authentication platform

Video conferencing application

Video conferencing application

Artificial lighting device

transmitter

receiver

# FIG. 1

Authentication platform

Video conferencing application

Video conferencing application

transmitter

receiver

# FIG. 2a

EP 4 779 987 A1

| Authentication-enabled video conferencing application | Authentication-enabled video conferencing application |

transmitter                    receiver

# FIG. 2b

Authentication platform

| Video conferencing application | Video conferencing application |

transmitter                    receiver

# FIG. 2c

FIG. 3

FIG. 4

## FIG. 5

## FIG. 6

Authentication platform

endpoint

Artificial lighting device

transmitter

scene

FIG. 7

# EUROPEAN SEARCH REPORT

**Application Number**

EP 25 15 2141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2023/385385 A1 (SHMUEL UR INNOVATION LTD) 30 November 2023 (2023-11-30)<br>* abstract *<br>* paragraph [0008] *<br>* paragraph [0016] - paragraph [0021] *<br>* paragraph [0035] - paragraph [0039] *<br>* paragraph [0042] *<br>* paragraph [0044] - paragraph [0046] *<br>* paragraph [0051] - paragraph [0053] *<br>* paragraph [0056] *<br>* paragraph [0066] - paragraph [0068] *<br>* paragraph [0076] *<br>* paragraph [0085] - paragraph [0087] *<br>* paragraph [0091] *<br>* paragraph [0095] *<br>* figures 1A,2 * | 1-15 | INV.<br>H04N21/234<br>H04N7/15<br>H04N21/4223<br>H04N21/4788<br>H04N21/83<br>H04N21/235<br>H04N21/258<br>H04N21/41<br>H04N21/436 |
| X | US 2017/076587 A1 (HILDMANN HANNO [ES] ET AL) 16 March 2017 (2017-03-16)<br>* abstract *<br>* paragraph [0005] *<br>* paragraph [0021] - paragraph [0029] *<br>* paragraph [0036] - paragraph [0040] *<br>* paragraph [0045] *<br>* paragraph [0070] - paragraph [0071] *<br>* paragraph [0074] *<br>* figures 3,4 * | 1-15 | |
| | | | **TECHNICAL FIELDS SEARCHED (IPC)**<br><br>H04N |
| X | US 2012/262575 A1 (CHAMPAGNE JEAN-PHILIPPE [US] ET AL) 18 October 2012 (2012-10-18)<br>* abstract *<br>* paragraph [0021] - paragraph [0022] *<br>* paragraph [0029] - paragraph [0030] *<br>* paragraph [0034] - paragraph [0036] *<br>* paragraph [0038] - paragraph [0043] *<br>* figures 2A,2B * | 1-15 | |

-/--

The present search report has been drawn up for all claims

| Place of search | Date of completion of the search | Examiner |
|---|---|---|
| The Hague | 9 April 2025 | Fantini, Federico |

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 15 2141

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/386747 A1 (HANSON RYAN EDWIN [US] ET AL) 21 November 2024 (2024-11-21) * abstract * * paragraph [0057] * * figure 5 * ----- | 1-15 | |
| A | GB 2 589 080 A (ETHERSEC IND LTD [GB]) 26 May 2021 (2021-05-26) * abstract * * page 8, line 7 - line 19 * * page 13, line 1 - line 15 * * page 14, line 8 - page 17, line 11 * * figures 1,2 * ----- | 1-15 | |
| A | RAAHAT DEVENDER SINGH ET AL: "Video content authentication techniques: a comprehensive survey", MULTIMEDIA SYSTEMS., 17 February 2017 (2017-02-17), XP055427868, US ISSN: 0942-4962, DOI: 10.1007/s00530-017-0538-9 * abstract * * page 4, column 2 * * page 5, column 2 - page 7, column 1 * * figures 6,7 * ----- | 1-15 | TECHNICAL FIELDS SEARCHED (IPC) |

The present search report has been drawn up for all claims

| Place of search | Date of completion of the search | Examiner |
|---|---|---|
| The Hague | 9 April 2025 | Fantini, Federico |

**EP 4 779 987 A1**

## ANNEX TO THE EUROPEAN SEARCH REPORT
## ON EUROPEAN PATENT APPLICATION NO.

EP 25 15 2141

This annex lists the patent family members relating to the patent documents cited in  the above-mentioned European search report.
The members are as contained in the European Patent Office EDP file on
The European Patent Office is in no way liable for these particulars which are merely given for the purpose of information.

09-04-2025

| Patent document cited in search report | Publication date | Patent family member(s) | | Publication date |
|---|---|---|---|---|
| US 2023385385 A1 | 30-11-2023 | NONE | | |
| US 2017076587 A1 | 16-03-2017 | EP | 3120335 A1 | 25-01-2017 |
| | | US | 2017076587 A1 | 16-03-2017 |
| | | US | 2018075732 A1 | 15-03-2018 |
| | | WO | 2015139780 A1 | 24-09-2015 |
| US 2012262575 A1 | 18-10-2012 | NONE | | |
| US 2024386747 A1 | 21-11-2024 | CN | 119007256 A | 22-11-2024 |
| | | DE | 102024113057 A1 | 21-11-2024 |
| | | US | 2024386747 A1 | 21-11-2024 |
| GB 2589080 A | 26-05-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10929677 B1
- US 2022004904 A1
- EP 0738080 A1
- WO 2022084421 A
- US 2023385385 A1
- US 9871963 B2